**Europäisches Patentamt**

**European Patent Office**

**Office européen des brevets**

(19)

(11) Veröffentlichungsnummer: **0 272 713 B1**

# EUROPÄISCHE PATENTSCHRIFT

(12)

(45) Veröffentlichungstag der Patentschrift: **23.10.91**

(51) Int. Cl.⁵: **B02C 13/20, B02C 13/30**

(21) Anmeldenummer: **87202170.4**

(22) Anmeldetag: **05.11.87**

(54) **Antriebs- und Lageranordnung für zwei gegensinnig und nebeneinander umlaufende Rotorsysteme.**

(30) Priorität: **24.12.86 DE 3644448**

(43) Veröffentlichungstag der Anmeldung:
**29.06.88 Patentblatt 88/26**

(45) Bekanntmachung des Hinweises auf die Patenterteilung:
**23.10.91 Patentblatt 91/43**

(84) Benannte Vertragsstaaten:
**AT BE CH ES FR GB GR IT LI LU NL SE**

(56) Entgegenhaltungen:
**EP-A- 0 048 012**
**DE-A- 3 417 556**

(73) Patentinhaber: **CITADEL INVESTMENTS LIMITED**
**25 Hill Street**
**St. Helier, Jersey Channel Island(GB)**

(72) Erfinder: **Nickel, Klaus-Dietrich**
**Atzelbergstrasse 123**
**W-6000 Frankfurt am Main 60(DE)**

(74) Vertreter: **Meier, Robert, Dipl.-Ing.**
**Patentanwalt Dipl.-Ing. Robert Meier Auf dem Mühlberg 16**
**W-6000 Frankfurt am Main 70(DE)**

## Beschreibung

Die Erfindung bezieht sich auf eine Antriebs- und Lageranordnung für gegensinnig und nebeneinander umlaufende Rotorsysteme eines Desintegrators., welche jeweils einen Rotorträger mit rückseitig auskragender Antriebsnabe aufweisen, die in unmittelbarer Nähe ihres Rotorträgers mittels eines Rotorlagers und an ihrem rückseitigen Ende mittels eines Antriebslagers drehbar auf einer in zwei beabstandeten Lagerböcken drehfest gehaltenen Tragachse gelagert sind.

Derartige Antriebs- und Lageranordnungen für Arbeits- bzw. Zerkleinerungsanordnungen mit gegensinnig umlaufenden Rotoren (EP-A2-0 048 012) sind bei modernen, schnell umlaufenden Desintegratoren nur bedingt einsetzbar, weil durch sie nahezu unbeherrschbare Schwingungen entstehen, die nicht nur die Standzeit der Desintegratoren herabsetzen, sondern auch die Ursache für intensive Geräuschabstrahlungen sind. Trotz guter Auswuchtung der Rotorsysteme und aller drehender Teile werden die Schwingungen durch das zu zerkleinernde Material verursacht, was sich mehr oder weniger stark an den Schaufeln festsetzt. Dieser Effekt ist zwar einerseits erwünscht, weil dadurch der Verschleiß an den Schaufeln herabgesetzt wird, er führt andererseits aber früher oder später zu Unwuchterscheinungen, die verantwortlich für die Schwingungen sind und die bisher kaum zu kompensieren waren.

Da die Rotorsysteme, vor allem bei schnell laufenden Desintegratoren, zudem als Kreisel wirken, verursachen die in der Regel ungleichen Beschichtungen der Schaufeln mit dem zerkleinerten Material sowie ihre Belastung bei der Zugabe von noch nicht zerkleinertem Mahlgut vielfach sog. d'Alembertsche Kräfte auf die rotierenden Systeme, die sich vor allem auf die Lager auswirken. Wenn diese Lager Bestandteile des Desintegratorgehäuses sind, wirkt letzteres wie ein Resonanzboden bei der Abstrahlung der Geräusche.

Der vorliegenden Erfindung liegt die Aufgabe zugrunde, eine Antriebs- und Lageranordnung für die Rotorsysteme von Desintegratoren zu schaffen, durch die sich Schwingungen auf ein Mindestmaß herabsetzen und die Geräuschbildungen nahezu vollständig vermeiden lassen.

Diese Aufgabe wird bei einer gattungsgemäßen Vorrichtung durch die kennzeichnenden Merkmale des Anspruchs 1 gelöst.

Hierdurch wird erreicht, daß nicht nur die in den rotierenden Systemen auftretenden Schwingungen durch die schwingungsabsorbierend elastische Abstützung des Träger- und Versorgungsrohres kompensiert werden, sondern es ergibt sich darüberhinaus der Vorteil, daß auch die erheblichen Antriebskräfte, beispielsweise die Zugkräfte von Antriebsriemen von den Achsstümpen aufgenommen und über die Lagerböcke in die Fundamente abgeführt werden können, ohne daß die Achsstümpfe und die Lagerböcke zugleich auch Schwingungen absorbieren müssen. Anderseits erfolgt die erfindungsgemäße Schwingungsabsorbtion durch Konstruktionselemente, die nicht zuglich auch die Belastungen durch Antriebsriemen ableiten müssen.

Die Rotor- und Antriebslager sind Spezialwälzlager, die vor allem bei hohen Drehzahlen etwa um 3000 Umdrehungen pro Minute noch einwandfrei arbeiten.

Die Antriebs- und Lageranordnung nach der Erfindung ist weder Be standteil des Desintegratorgehäuses, noch ist sie mit diesem fest verbunden, so daß dieses nicht als Resonanzkörper für unter Umständen nicht vollständig kompensierte Restschwingungen der rotierenden Systeme wirken kann. Die schwingungsabsorbierend elastische Abstützung des Träger- und Versorgungsrohres erfolgt in einem bevorzugten Ausführungsbeispiel durch je ein spezielles hydrodynamisches Lager an den Rohrenden, welches schwimmend mit dem zugehörigen Achsstumpf in Wirkverbindung steht. Diese Lager können auch mit geringeren Toleranzen arbeiten, um je nach Größe und Drehzahl des Desintegrators eine optimale Dämpfung der auftretenden Schwingungen zu erreichen.

Einzelheiten der Erfindung lassen sich den Unteransprüchen 2 bis 21 entnehmen. Von Vorteil ist, daß die Rotor- und Antriebslager von einem durch das Träger- und Versorgungsrohr fließenden Kühlmittelstrom gekühlt werden. Als Kühlmittel kann Leichtöl verwendet werden. Man ist so in der Lage, die Lagertemperatur auf 100° C bis 120° C herabzusetzen. Das zur Kühlung verwendete Öl z.B. auch Hydrauliköl, dient zusätzlich zur Schwingungsdämpfung. Der Kühlmittelstrom innerhalb der Antriebs- und Lageranordnung kann dadurch beeinflußt werden, daß die Ablauföffnung etwas enger als die Zulauföffnung gehalten wird, um einen leichten Ölstau zu bewirken.

Durch den Einsatz der Antriebs- und Lageranordnung nach der Erfindung ist man in der Lage, nicht nur die Standzeit bzw. die Lebensdauer eines Desintegrators wesentlich zu erhöhen, sondern auch die Geräuschbildung auf etwas 45 Dezibel herabzusetzen. Dieser Wert wird in etwa 10 m Entfernung von der Halle, in welcher der Desintegrator mit der neuen Antriebs- und Lageranordnung aufgestellt ist, gemessen.

Durch den geräuscharmen Betrieb infolge der erfindungsgemäßen Ausbildung der Antriebs- und Lageranordnung braucht der Desintegrator nicht mit einem schalldämpfenden teueren Gehäuse versehen zu werden. Auch der Einsatz von Schallschleusen in der Desintegratorhalle entfällt.

Würde man - was durchaus möglich ist - die Antriebsnaben der Rotorsysteme direkt an Elektromotoren ankoppeln, würden sich die nicht kompensierten Restschwingungen auf die Motorlager übertragen. Dieses vermeidet man durch den Einsatz von Flachriemen als Antriebsriemen.

Die rotierenden System sind mit Temperaturfühlern und Schwingungsfühleren ausgerüstet, deren Leitungen durch das Träger- und Versorgungsrohr geführt sind. Sie führen zu einem Prozeßrechner, der jedoch nicht Gegenstand der vorliegenden Erfindung ist.

Die Achsstümpfe sind in Lagern verankert, die aus zwei Lagerschalen bestehen, von denen sich die obere Lagerschale relativ leicht anheben läßt, so daß die gesamte Antriebs- und Lageranordnung zum Auswechseln abgehoben werden kann.

Ein Ausführungsbeispiel der Erfindung wird nachfolgend anhand der Zeichnung erläutert.

Es zeigt:

Fig. 1 einen Längsschnitt durch die Erfindung und

Fig. 2 einen Querschnitt entlang der Linie II/II in Fig. 1.

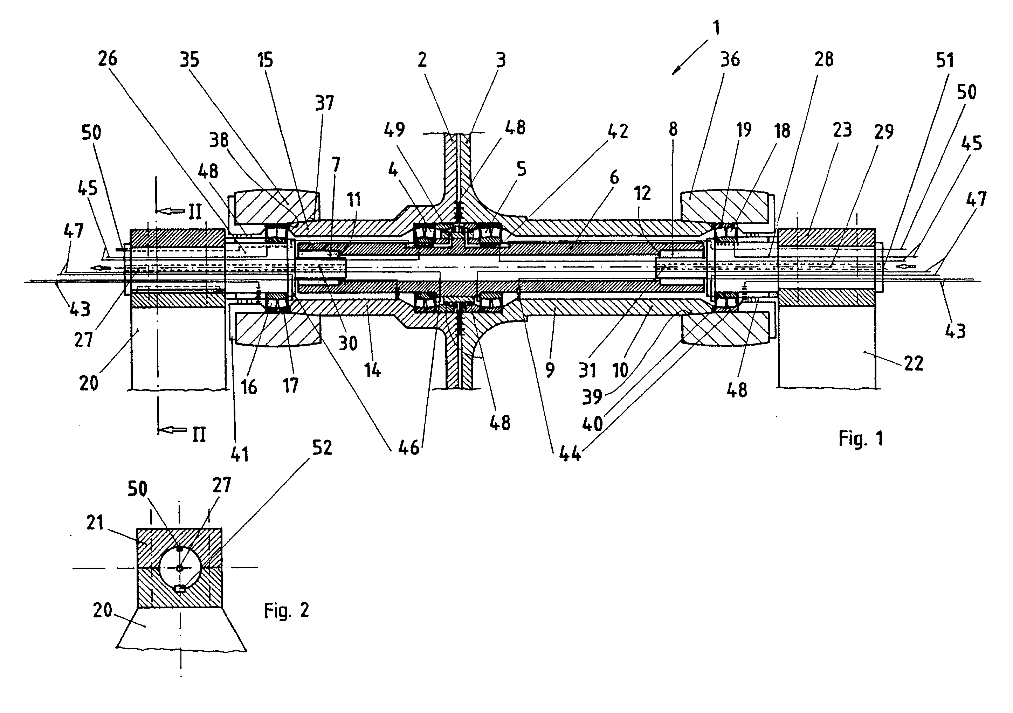

Fig. 1 zeigt - teils schematisch - einen Längsschnitt durch die Antriebs- und Lageranordnung 1 nach der Erfindung.

Zwei gegensinnig und nebeneinander umlaufende Rotorträger 2 und 3 sind nur teilweise dargestellt. An ihnen können jenseits der Bruchlinien nicht dargestellte Rotorsysteme mit beliebigen Schaufeln befestigt sein. Diese Rotorsysteme mit den Rotorschaufeln sowie ihre Ausbildung gehören nicht zur vorliegenden Erfindung.

Jeder Rotorträger 2 bzw. 3 ist unmittelbar mittels eines Rotorlagers 4 bzw. 5 auf einem Träger- und Versorgungsrohr 6 gelagert, welches im einzelnen später erläutert wird. Jedes Rotorlager 4 bzw. 5 wird durch einen nicht bezeichtneten Ring in der ebenfalls nicht bezeichneten Lagerbohrung in den Rotorträgern 2,3 festgehalten.

An jeden Rotorträger 2, 3 schließt sich eine Antriebsnabe 9 bzw. 14 an, deren Enden 10 , 15 mittels je eines Antriebslagers 16 bzw. 18 auf je einem axial beweglichen Achsstumpf 26, 28 in einem Lagerbock 20, 22 gelagert sind.

Im dargestellten Ausführungsbeispiel sind die Rotorträger 2 bzw. 3 und ihre Antriebsnaben 14 bzw. 9 einstückig beispielsweise aus Stahlguß hergestellt. Rotorträger 2, 3 und Antriebsnaben 14 bzw. 9 bilden jeweils eine Einheit. Die Antriebsnaben 9 bzw. 14 sind ungleich lang. Die in Fig. 1 rechts dargestellte Antriebsnabe 9 ist länger als die linke Antriebsnabe 14. Das liegt daran, daß auf der rechten Seite der Antriebs- und Lageranordnung 1 im nicht dargestellten Desintegratorgehäuse der Zuführtrichter für das Mahlgut angeordnet ist.

Jedes Ende 10, 15 der Antriebsnaben 9 bzw.

14 ist fest mit einer Riemenscheibe 35, 36 verbunden, über welche die Rotorsyteme vermittels Flachriemen von Elektromotoren gegensinnig angetrieben werden. Im dargestellten Ausführungsbeispiel sind die Enden 10 bzw. 15 der Antriebsnaben 9 bzw. 14 als Konus 39 bzw. 37 ausgebildet. Auf diese konusförmigen Enden Antriebsnaben 9 bzw. 14 sind entsprechend ausgebildete Riemescheiben 35 bzw. 36 aufgeschrumpft. Ohne am Kern der Erfindung etwas zu ändern, können die Riemenscheiben 35 und 36 auch auf andere Art und Weise mit den Enden 10 bzw. 15 der Antriebsnaben 9 bzw. 14 verbunden sein. Es hat sich jedoch herausgestellt, daß durch das Aufschrumpfen nicht nur eine sehr gute Antriebsverbindung zwischen den Riemenscheiben und den Antriebsnaben herstellbar ist, sondern daß dadurch auch eine gute Wärmeabfuhr von den oft hochbelasteten Riemenscheiben 35, 36 stattfindet, die noch dadurch gefördert wird, daß die Riemenscheiben 35 bzw. 36 aus Leichtmetallguß, beispielsweise Aluminiumguß, hergestellt und mit Ventilatorflächen 41 versehen werden.

Die Antriebslager 16 bzw. 18 sind etwa in der Mitte der Riemenscheiben 35 bzw. 36 angeordnet. Der jeweils äußere Laufring 17 bzw. 19 der Antriebslager 16 bzw. 18 liegt an den Endringflächen 38 bzw. 40 der konusförmigen Enden 10 bzw. 15 der Antriebsnaben 9 und 10 an. Die Rotorlager 4 bzw. 5 und die Antriebslager 16 bzw. 18 sind als Spezialpendelrollenlager ausgebildet, die auch noch bei Rotordrehzahlen, beispielsweise um 3000 Umdrehungen pro Minute sicher arbeiten.

Die Antriebslager 16 und 18 sitzen auf Achsstümpfen 26 bzw. 28, die mit Längsbohrungen 27 bzw. 29 versehen sind. Die Achsstümpfe 26 bzw. 28 sind in den Lagerböcken 20 bzw. 22 axial beweglich gelagert. Diese axiale Beweglichkeit kann je nach Durchmesser der Antriebsnaben 9 bzw. 14 in solchen Toleranzen gestattet werden, die zur Aufnahme der Wärmeausdehnung der Antriebsnaben 9 bzw. 14 erforderlich sind.

Fig. 1 und 2 zeigen, daß jeder Lagerbock 20, 22 zur Verankerung der Achsstümpfe 26, 28 eine abnehmbare Lagerschale 21 bzw. 23 aufweist, die auf an sich bekannte Weise leicht abgehoben werden kann. Nach dem Abheben ist die gesamte Antriebs- und Lageranordnung 1 leicht aus ihrer Verankerung abzuheben, was dem Austausch und dem Service sehr dienlich ist. Jeder Achsstumpf 26, 28 ist gegenüber dem Lagerbock 20, 22 mittels einer Nuß-Paßfeder 52 gegen Verdrehung gesichert.

Die schwingungsdämpfende elastische Lagerung des Träger- und Versorgungsrohres 6 erfolgt über neuartige hydrodynamische Lager 7 bzw. 8, die jedoch nicht Gegenstand der vorliegenden Erfindung sind. Diese hydrodynamischen Lager 7, 8 sind imstande, alle wesentlich auftretenden Schwingungen der gegensinnig rotierenden Systeme zu kompensieren. Die hydrodynamischen Lager 7 und 8 sitzen auf Lagerzapfen 30 bzw. 31 an den Achsstümpfen 26 bzw. 28 und in Lageraufnahmebohrungen 11 und 12 in den Enden des Träger- und Versorgungsrohres 6. Die Längsbohrungen 27 bzw. 29 sind durch die Lagerzapfen 30 und 31 fortgeführt und fluchten mit dem Träger-und Versorgungsrohr 6. Die hydrodynamischen Lager 7 bzw. 8 gestatten eine "schwimmende" Lagerung der Rotorträger 2, 3.

Aus dem Schnittbild der Fig. 1 ist leicht zu erkennen, daß der auf die Riemenscheiben 35 bzw. 36 ausgeübte oft starke Riemenzug direkt über die Achsstümpfe 26 bzw. 28 und die Lagerböcke 20 bzw. 22 in die nicht dargestellten Fundamente der Antriebs-und Lageranordnung 1 abgeführt werden, ohne sich auf die rotierenden Systeme der Antriebs- und Lageranordnung 1 auszuwirken. Die rotierenden Systeme sind an der dafür geeigneten Stelle, nämlich in unmittelbarer Nähe der Rotorträger 2 und 3 mittels der Pendelrollenlager 4 und 5 drehbar auf dem schwingungsdämpfend abgestützten Träger- und Versorgungsrohr 6 gelagert. Die Schwingungen der rotierenden Systeme werden daher über das Träger- und Versorgungsrohr 6 in den hydrodynamischen Lagern 7 und 8 kompensiert. Auf diese Art und Weise übertragen sie sich nicht auf die Lagerböcke 20 bzw. 22 und erst recht nicht auf das Desintegratorgehäuse, welches in keiner festen Verbindung mit der Antriebs- und Lageranordnung 1 steht.

Wie Fig. 1 erkennen läßt, sind im Bereich der als Pendelrollenlager ausgebildeten Rotorlager 4 und 5 und Antriebslager 16 und 18 Temperaturfühler 42 und Schwingungsfühler 44 angeordnet. Ihre Leitungen 43 und 45 werden durch das Träger- und Versorgungsrohr 6 und die Längsbohrungen 27 bzw. 29 der Achsstümpfe 26 und 28 nach außen geführt. Sie stehen in Verbindung mit einem nicht dargestellten Prozeßrechner, der nicht Gegenstand der vorliegenden Erfindung ist.

Im Schnittbild gemäß Fig. 1 ist weiterhin erkennbar, daß die Pendelrollenlager 4, 5 bzw. 16 und 18 mit Schmierstoffnebeldüsen 46 ausgerüstet sind, deren Schmierstoffleitungen 47 auch durch das Träger- und Versorgungsrohr 6 und die Achsstümpfe 26 und 28 geführt sind.

Zwischen den gegensinnig umlaufenden Rotorträgern 2 und 3 und vor den Außenseiten der als Pendelrollenlager ausgebildeten Antriebslager 16, 18 sind Labyrinthdichtungen 48 angeordnet, die einerseits ein Eindringen des Mahlgutes in den Bereich zwischen den Antriebsnaben 9 und 14 und dem Träger- und Versorgungsrohr 6 verhindern und andererseits die Antriebslager schützen. Auf diese Weise werden alle Pendelrollenlager 4 bzw. 5 bzw. 16 und 18 vor schädlichen Einwirkungen gesichert. Die Labyrinthdichtungen 48 stehen in Wirkverbindung mit Sperrgasdüsen 49, die über Sperrgasleitungen 50 versorgt werden. Diese Sperrgasleitungen können entweder außerhalb oder auch innerhalb des Träger- und Versorgungsrohres 6 geführt sein und, wie die Fig. 1 und 2 erkennen lassen über die Achsstümpfe 26 bzw. 28 nach außen geführt werden. Durch den leichten Überdruck der Sperrgase innerhalb des Raumes zwischen den Antriebsnaben 9 bzw. 14 und dem Träger- und Versorgungsrohr 6 wird auch der Ölnebel der Schmierstoffnebendüsen 46 abgeführt, der auf dies Weise auch mit zur Kühlung der Antriebs- und Lageranordnung 1 verwendet wird.

Auf der rechten Seiten der Fig. 1 ist ein Versorgungsanschluß 51 für eine Kühlflüssigkeit angedeutet. Die Kühlflüssigkeit wird durch die Bohrungen 27 bzw. 29 in das Innere des Träger- und Versorgungsrohres 6 eingeführt. Über die Versorgungsanschlüsse 51 ist die Antriebs- und Lageranordnung 1 an einen geschlossenen Kühlkreislauf mit einem nicht dargestellten Ölkühler angeschlossen. Dieser Kühlkreislauf ist der Deutlichkeit wegen in Fig. 1 nicht dargestellt. Als Kühflüssigkeit kann ein dafür besonders geeignetes Hydrauliköl verwendet werden.

Fig. 2 zeigt, daß mittels einer Nut-Paßfeder 52 dafür gesorgt ist, daß die Achsstümpfe 26 bzw. 28 axial beweglich, aber verdrehsicher in den Lagerböcken 20 und 22 angeordnet sind. Beide Lagerböcke 20, 22 weise je eine abnehmbare Lagerschale 21, 23 auf, nach deren Entfernung die gesamte Antriebs- und Lageranordnung 1 zum Auswechseln aus den Lagerböcken 20 und 22 abgehoben werden kann.

**Patentansprüche**

1. Antriebs- und Lageranordnung (1) für zwei gegensinnig und nebeneinander umlaufende Rotorsysteme eines Desintegrators, welche jeweils einen Rotorträger (2, 3) mit rückseitig auskragender Antriebsnabe (9, 14) aufweisen, die in unmittelbarer Nähe ihres Rotorträgers (2, 3) mittels eines Rotorlagers (4, 5) und an ihrem rückseitigen Ende (10, 15) mittels eines Antriebslagers (16, 18) drehbar auf einer in zwei beabstandeten Lagerböcken (20, 22) drehfest gehaltenen Tragachse gelagert sind, dadurch gekennzeichnet, daß die Tragachse aus zwei in den Lagerböcken (20, 22) verdrehsicher aber axial beweglich gelagerten Achsstümpfen (26, 28) sowie einem dazwischen angeordneten, mit seinen Enden an den Achsstümpfen (26, 28) schwindungsabsorbierend-elastisch abgestützten Träger- und Versorgungsrohr (6) gebildet ist, wobei die Rotorlager (4, 5) beider Rotorsysteme auf diesem gemeinsamen Träger- und Versorgungsrohr (6) und die Antriebslager (16, 18) auf den jeweiligen Achsstümpfen (26, 28) angeordnet sind.

2. Anordnung nach Anspruch 1, dadurch gekennzeichnet, daß als Rotor- und Antriebslager (4, 5; 16, 18) Wälzlager dienen, die auch axiale Führungskräfte aufnehmen können.

3. Antriebs- und Lageranordnung nach Anspruch 1, dadurch gekennzeichnet, daß die Rotor- und Antriebslager (4, 5; 16, 18) Pendelrollenlager sind.

4. Antriebs- und Lageranordnung nach den Ansprüchen 1 - 3, dadurch gekennzeichnet, daß das Ende (10, 15) jeder Antriebsnabe (9, 14) fest mit einer Riemenscheibe (35, 36) verbunden ist.

5. Antriebs- und Lageranordnung nach Anspruch 4, dadurch gekennzeichnet, daß das Ende (10, 15) jeder Antriebsnabe (9, 14) als Konus (37, 39) ausgebildet ist, auf den die entsprechend ausgebildete Riemenscheibe 935, 36) aufgeschrumpft ist.

6. Antriebs- und Lageranordnung nach den Ansprüchen 2 bis 5, dadurch gekennzeichnet, daß jedes Antriebslager (16, 18) etwa in der Mitte der Riemenscheibe (35, 38) sitzt.

7. Antriebs- und Lageranordnung nach Anspruch 6, dadurch gekennzeichnet, daß der äußere Laufring (17, 19) jedes Antriebslagers (16, 18) an der Endringfläche (38, 40) der Antriebsnabe (9, 14) anliegt.

8. Antriebs- und Lageranordnung nach den Ansprüchen 4 bis 6, dadurch gekennzeichnet, daß jede riemenscheibe (35, 36) aus Leichtmetallguß besteht.

9. Antriebs- und Lageranordnung nach Anspruch 8, dadurch gekennzeichnet, daß jede Riemenscheibe (35, 36) mit Ventilatorflächen (41) versehen ist.

10. Antriebs- und Lageranordnung nach Anspruch 1, dadurch gekennzeichnet, daß jeder Achsstumpf (26,28) eine Längsbohrung (27, 29) aufweist, die mit dem Träger- und Versorgungsrohr (6) fluchtet, zu dessen schwingungsabsorbierender elastischer Abstützung seine Enden mittels je eines hydrodynamischen Lagers (7, 8) schwimmend mit dem zugehörigen Achsstumpf (26, 28) in Wirkverbindung stehen.

11. Antriebs- und Lageranordnung nach Anspruch 10, dadurch gekennzeichnet, daß jedes hydrodynamische Lager (7, 8) auf einem Lagerzapfen (30, 31) am Achsstumpf (26, 28) und in einer Lageraufnahmebohrung (11, 12) im Träger- und Versorgungsrohr (6) sitzt.

12. Antriebs- und Lageranordnung nach einem oder mehreren der vorangehenden Ansprüche, dadurch gekennzeichnet, daß Rotorträger (2, 3) und Antriebsnaben (9,14) jeweils eine Einheit bilden.

13. Antriebs- und Lageranordnung einem oder mehreren der vorangehenden Ansprüche, dadurch gekennzeichnet, daß die Antriebsnaben (9, 14) ungleich lang sind.

14. Antriebs- und Lageranordnung nach einem oder mehreren der vorangehenden Ansprüche, dadurch gekennzeichnet, daß im Bereich der Rotor- bzw. Antriebslager (4, 5; 16, 18) Temperaturfühler (42) für eine Prozeßsteuerung vorgesehen sind.

15. Antriebs- und Lageranordnung nach Anspruch 14, dadurch gekennzeichnet, daß im Bereich der Rotor- bzw. Antriebslager (4, 5; 16, 18) schwingungsfühler (44) vorgesehen sind.

16. Antriebs- und Lageranordnung nach einem oder mehreren der vorangehenden Ansprüche, dadurch gekennzeichnet, daß neben den Rotor- und Antriebslagern (4, 5; 16, 18) Schmierstoffnebeldüsen (46) vorgesehen sind.

17. Antriebs- und Lageranordnung nach einem oder mehreren der vorangehenden Ansprüche dadurch gekennzeichnet, daß zwischen den inneren Bereichen der gegensinnig umlaufenden Rotorträger (2, 3) eine Labyrinthdichtung (48) vorgesehen ist.

18. Antriebs- und lageranordnung nach einem oder mehreren der vorangehenden Ansprüche, dadurch gekennzeichnet, daß an den Aussenseiten der als Pendelrollenlager ausgebildeten Antriebslager (16, 18) Labyrinthdichtungen (48) angeordnet sind.

19. Antriebs- und Lageranordnung nach den Ansprüchen 17 und 18, dadurch gekennzeichnet, daß jede Labyrinthdichtung (48) mit wenigstens einer an eine Sperrgasleitung (50) angeschlossenen Sperrgasdüse (49) ausgestattet ist.

20. Antriebs- und Lageranordnung nach den Ansprüchen 14 bis 19, dadurch gekennzeichnet, daß die Schwingungsfühler (44) sowie die Schmierstoffleitungen (47) für die Schmierstoffnebendüsen (46) und die Sperrgasleitungen (50) für die Labyrinthdichtungen (48) durch wenigstens einen Achsstumpf (26, 28) und das Träger- und Versorgungsrohr (6) geführt sind.

21. Antriebs- und Lageranordnung nach den Ansprüchen 1 bis 20, dadurch gekennzeichnet, daß die äußeren Öffnungen der Achsstümpfe (26, 28) über Versorgungsanschlüsse (51) an einen Kühlmittelkreislauf anschließbar sind.

22. Antriebs- und Lageranordnung nach einem oder mehreren der vorangehenden Ansprüche, dadurch gekennzeichnet, daß jeder Lagerbock (20, 22) zur Verankerung der Achsstümpfe (26,28) eine abnehmbare Lagerschale (21, 23) aufweist, und daß jeder Achsstumpf (26, 28) gegenüber dem Lagerbock (20, 22) mittels einer Nut-Paßfeder (52) gegen Verdrehung gesichert ist.

## Claims

1. A drive and bearing arrangement (1) of a disintegrator for two rotor systems which rotate in opposite directions and are mounted next to each other, wherein each rotor system has a rotor support (2,3) including a rear-sidedly projecting drive hub (9,14), and which are rotatably mounted, through a rotor bearing (4,5), in immediate proximity to the rotor support (2,3) thereof and on the rear end (10,15) thereof, through a drive bearing (16,18), are rotatably mounted on a support shaft held resistant against torsion in two spaced-apart bearing blocks (20,22),
characterized in
that the support axis is formed of two shaft stubs (26,28) mounted in torison-resistant yet axially movable manner in bearing blocks (20,22), and a support and supply tube (6) mounted therebetween and supported with the ends thereof on the shaft stubs (26,28) in vibration-absorbing and elastically mounted manner, with the rotor bearing (4,5) of both rotor systems being mounted on the said common support and supply tube (6) and the drive bearings (16,18) being mounted on the respective shaft stubs (26,28).

2. The arrangement acocording to claim 1, characterized in that the rotor drive bearings (4,5; 16,18) are antifriction bearings also capable to accommodate axial guiding forces.

3. The drive and bearing arrangement according to claim 1, characterized in that the rotor and drive bearings (4,5; 16,18) are self-aligning roller bearings.

4. The drive and bearing arrangement according to claims 1 to 3, characterized in that the end (10,15) of each drive hub (9,14) is rigidly connected to a belt pulley (35,36).

5. The drive and bearing arrangement according to claim 4, characterized in that the end (10,15) of each drive hub (9,14) is of a conical shape (37,39), the belt pulley (35,36) of conforming shape being shrunk thereon.

6. The drive and bearing arrangement according to claims 2 to 5,
characterized in
that each drive bearing (16,18) is mounted approximately midway of the belt pulley (35,38).

7. The drive and bearing arrangement according to claim 6, characterized in that the outer race ring (17,19) of each drive bearing (16,18) is in abutment with the annular end face (38,40) of the drive hub (9,14).

8. The drive and bearing arrangement according to claims 4 to 6,
characterized in that each belt pulley (35,36) is of light cast metal.

9. The drive and bearing arrangement according to claim 8,
characterized in that each belt pulley (35,36) is provided with fan surfaces (41).

10. The drive and bearing arrangement according to claim 1,
characterized in that each shaft stub (26,28) defines an axial bore (27,29) in alignment with the support and supply tube (6), with the ends of support and supply tube (6) being operatively connected to the respective shaft stub (26,28) in a floating fashion respectively by means of hydrodynamic bearings (7,8) for the vibration absorbing elastic support of the tube.

11. The drive and bearing arrangement according to claim 10, characterized in that each hydrodynamic bearing (7,8) is seated on a bearing journal (30,31) on the shaft stub (36,28) and in a bearing receiving bore (11,12) in the support and supply tube (6).

12. The drive and bearing arrangement according to any one or more of the preceding claims, characterized in that rotor supports (2,3) and drive hubs (9,14) respectively form a unit.

13. The drive and bearing arrangement according to any one or more of the preceding claims, characterized in that the drive hubs (9,14) are of unequal length.

14. The drive and bearing arrangement according to any one or more of the preceding claims, characterized in that temperature sensors (42) for a computer control are provided in the vicinity of the rotor and driving bearings (4,5;16,18), respectively.

15. The drive and bearing arrangement according to claim 14, characterized in that vibration sensors (44) are provided in the vicinity of the rotor and driving bearings (4,5;16,18), respectively.

16. The driving and bearing arrangement according to any one or more of the preceding claims, characterized in that lubricant mist nozzles (46) are provided adjacent the rotor and driving bearings (4,5;16,18), respectively.

17. The drive and bearing arrangement according to any one or more of the preceding claims, characterized in that a labyrinth seal (48) is provided between the inner portions of the oppositely rotating rotor supports (2,3).

18. The driving and bearing arrangement according to any one or more of the preceding claims, characterized in that labyrinth seals (48) are provided on the outer portions of the drive bearings (16,18) formed as self-aligning roller bearings.

19. The driving and bearing arrangement according to claims 17 and 18, characterized in that each labyrinth seal (48) is provided with at least one barrier gas nozzle (49) connected to a barrier gas line (50).

20. The drive and bearing arrangement according to claims 14 to 19, characterized in that the vibration sensors (44) and the lubricant lines (47) for the lubricant mist nozzles (46) and the barrier gas lines (50) for the labyrinth seals (48) are passed through at least one shaft stub (26,28) and the support and supply tube (6).

21. The drive and bearing arrangement according to claims 1 to 20, characterized in that outer openings of the shaft stubs (26,28), through supply connections (51), are capable of being connected to a coolant circuit.

22. The drive and bearing arrangement according to any one or more of the preceding claims, characteriezd in that each bearing block (20,22) exhibits a removable bearing shell (21,23) for anchoring the shaft stubs (26,28), and that each shaft stub (26,28) is secured against rotation relative to the bearing block (20,22) by means of a feather key (52).

**Revendications**

1. L'ensemble de commande et de palier (1) pour deux systèmes rotors d'un désintégrateur tournant en sens opposé et montés l'un à coté de l'autre, chacun comportant un rotor support (2,3) ayant un moyeu de commande (9,14) saillissant en arrière, qui, à proximité immédiate de leur rotor support (2,3) par l'intermédiaire d'un palier rotor (4,5), et à ses extrémités d'arrière (10,15), par l'intermédiaire d'un palier de commande (16,18), sont disposés de manière pivotante sur un arbre support monté de manière résistante à la torsion en deux paliers-support (20,22) en espace l'un de l'autre,

caractérisé en ce

que l'arbre de support consiste de deux fusées d'essieu (26,28) disposées dans les paliers supports (20,22) de manière résistante à la torsion mais axialement movible, et d'un tube (6) de support et d'alimentation disposé entre les fusees d'essieu et supporté avec les extrémités aux fusées d'essieu (26,28) de manière absorbante de vibration et élastique, les paliers rotors (4,5) de deux systèmes rotors étant disposés sur ce tube (6) de support et d'alimentation commun, et les paliers de commande (16,18) étant disposés sur les fusées d'essieu (26,28) correspondantes.

2. L'ensemble selon la revendication 1, caractérisé en ce que des paliers à roulements servent comme des paliers rotors et commande (4,5;16,18), qui peuvent également recueillir des forces de guidage axiales.

3. L'ensemble de commande et de palier selon la revendication 1, caractérisé en ce que les paliers de rotor et de commande (4,5;16,18) sont des roulements à rouleaux articulé.

4. L'ensemble de commande et de palier selon les revendications 1 à 3, caractérisé en ce que l'extrémité (10,15) de chaque moyeu de commande (9,14) est fermement relié à une poulie (35,36).

5. L'ensemble de commande et de palier selon la revendication 4,
caractérisé en ce que l'extrémité (10,15) de chaque moyeu de commande (9,14) est sous forme d'un cône (37,39) sur lequel se reserre la poulie (35,36) sous forme correspondante.

6. L'ensemble de commande et de palier selon les revendications 2 à 5, caractérisé en ce que chaque palier de commande (16,18) est disposé à peu près au centre de la poulie (35,38).

7. L'ensemble de commande et de palier selon la revendication 6,
caractérisé en ce que l'anneau à billes extérieure (17,19) de chaque palier de commande (16,18) est aboutissant sur la surface annulaire à rive (38,40) du moyeu de commande (9,14).

8. L'ensemble de commande et de palier selon les revendications 4 à 6, caractérisé en ce que chaque poulie (35,36) est formée d'une pièce coulée d'alliage leger.

9. L'ensemble de commande et de palier selon la revendication 8, caractérisé en ce que chaque poulie (35,36) est prévue de surfaces de ventilateur (41).

10. L'ensemble de commande et de palier selon la revendication 1, caractérisé en ce que chaque fusée d'essieu (26,28) comporte un alésage longitudinal (27,29) s'alignant avec le tube (6) de support et d'alimentation les extrémités desquels, pour son support de manière absorbante de vibration et élastique, par l'intermédiaire d'un palier (7,8) hydrodynamique, cooperent de manière flottante, avec la fusée d'essieu (26,28) appartenante.

11. L'ensemble de commande et de palier selon la revendication 10, charactérisé en ce que chaque palier (7,8) hydrodynamique (7,8) est assis sur un tourillon (30,31) à la fusée d'essieu (26,28) et dans un alésage à receuillir le palier (11,12) dans le tube de support et d'alimentation (6).

12. L'ensemble de commande et de palier selon l'une ou plusieurs de revendications précédentes, caractérisé en ce que les supports rotors (2,3) et les moyeux de commande (9,14) chaque fois forment une unité.

13. L'ensemble de commande et palier selon l'une ou plusieurs de revendications précédentes, caractérisé en ce que le moyeux de commande (9,14) sont d'une longueur différente.

14. L'ensemble de commande et de palier selon l'une ou plusieurs des revendications précédentes, caractérisé en ce que des palpeurs (42) pour une commande de Computer sont prévus dans la zone des paliers de rotor et de commande (4,5;16,18).

15. L'ensemble de commande et de palier selon la revendicatin 14, caractérisé en ce que des palpeurs de vibration (44) sont prévus dans la zone des paliers de rotor et de commande (4,5; 16,18).

16. L'ensemble de commande et de palier selon l'une ou plusieurs de revendications précédentes, caractérisé en ce que des tuyères à graisse brouillard (46) sont prévus à coté de paliers de rotor et de commande (4,5;16,18).

17. L'ensemble de commande et palier selon l'une ou plusieurs des revendications précédentes, caractérisé en ce qu'un joint à labyrinthe (48) est prévu entre les parties intérieurs des supports rotors (2,3) tournant en sens opposé.

18. L'ensemble de commande et de palier selon l'une ou plusieurs de revendications précédentes, caractérisé en ce que des joints de labyrinthe (48) sont disposés aux parties extérieurs des paliers de commande (16,18) sous forme de roulements à rouleaux articulé.

19. L'ensemble de commande et de palier selon les revendications 17 et 18, caractérisé en ce que chaque joint de labyrinthe (48) est prévu au moins d'un tuyère à gaz de blocage (49) relié à une conduite à gaz de blocage (50).

20. L'ensemble de commande et de palier selon les revendications 14 à 19, caractérisé en ce que les palpeurs de vibration (44) et les conduites à matière lubrifiante (47) pour les tuyères à graisse brouillard (46) et les conduits à gaz de blocage (50) pour les joints de labyrinthe (48) sont guidés à travers au moins d'une fusée d'essieu (26,28) et le tube de support et d'alimentation (6).

21. L'ensemble de commande et de palier selon les revendications 1 à 20, caractérisé en ce que les ouvertures exterieures des fusées d'essieu (26,28) par l'intermédiaire de connexions d'alimentation (51) dont reliable à un circuit refroidisseur.

**22.** L'ensemble de commande et de palier selon l'une ou plusieurs de revendications précédentes, caractérisé en ce que chaque palier support (20,22) comporte une coquille détachable pour ancrer les fusées d'essieu (26,28), et que chaque fusée d'essieu (26,28) est bloqué contre torsion vis-à-vis le palier support (20,22) par l'intermédiaire d'une rainure-clavette (52).

Fig. 1

Fig. 2

EP 0 272 713 B1